# EUROPÄISCHE PATENTSCHRIFT

(11) **EP 1 600 277 B1**
(45) Veröffentlichungstag und Bekanntmachung des Hinweises auf die Patenterteilung: **15.04.2015**
(21) Anmeldenummer: 05103331.4
(22) Anmeldetag: 25.04.2005
(51) Int. Cl.: B29C 47/88, B29C 47/90

(54) **Kühlvorrichtung und Kühlverfahren**
Cooling Device and cooling process
Dispositif et procédé de refroidissement

(30) Priorität: 27.05.2004 DE 102004026027
(43) Veröffentlichungstag der Anmeldung: 30.11.2005
(73) Patentinhaber: battenfeld-cincinnati Germany GmbH, 32547 Bad Oeynhausen (DE)
(72) Erfinder: Krampf, Nikolaus, 32547 Bad Oeynhausen (DE); Huth, Kurt, 86399 Bobingen (DE)

(56) Entgegenhaltungen:
- EP-A2- 0 442 253
- DE-A1- 2 658 680
- DE-A1- 3 521 331
- DE-A1- 3 802 095
- DE-C1- 19 522 118
- GB-A- 1 579 234
- JP-A- 5 309 679
- JP-A- 56 040 526
- US-A- 3 351 697
- US-A- 4 105 386
- US-A- 5 807 516
- US-A- 6 071 110

## Beschreibung

Die Erfindung betrifft eine Vorrichtung zum Kalibrieren und Kühlen einer Kunststofffolie oder Kunststoffplatte, die aus mindestens zwei Kühl- oder Kalibrierwalzen besteht, wobei den Walzen eine Kühlstrecke nachgeschaltet ist, sowie ein diesbezügliches Verfahren.

Bekannte Kalibrier- und Kühlvorrichtungen bestehen beispielsweise aus einem 3-Walzen Glättwerk mit einer Glättwalze und zwei Kühlwalzen. Die Wirkungsweise ist wie folgt: Die Folie läuft aus der Schlitzdüse in den Spalt zwischen der Glättwalze und der ersten Kühlwalze und wird dort geglättet. Anschließend läuft sie weiter auf dem Umfang der zweiten Walze (erste Kühlwalze) - Kühlung der ersten Seite der Folie - man spricht hier von einer einseitigen Kühlung. Dann läuft sie in den 2. Spalt zwischen der zweiten Walze und der dritten Walze und wird dort u. U. noch einmal geglättet. Danach läuft sie auf dem Umfang der dritten Walze (zweite Kühlwalze) - Kühlung der zweiten Seite der Folie - auch hier wieder eine einseitige Kühlung.

Es besteht also das Problem, dass in Abhängigkeit von der Foliengeschwindigkeit, der Foliendicke und der Walzengeometrie (Durchmesser) die Folie auf der ersten Kühlwalze stark einseitig gekühlt wird - u. U. bis über die halbe Foliendicke hinaus - so daß in jedem Fall Spannungen in der Folie eingefroren werden können, die bei einer späteren Verarbeitung zu einem Verzug des Endproduktes führen können. Dieser Vorgang wiederholt sich etwas abgeschwächt auf der zweiten Seite. Somit erfolgt die Auslegung des Glättwerks auf einen bestimmten Durchsatz- und/oder Produktbereich und ist später nur mit hohem Aufwand zu ändern oder zu korrigieren. Eine Steigerung der Ausstoßleistung ist nur bedingt möglich. Eine hohe Abkühlgeschwindigkeit der Folie und damit eine gewünschte hohe Transparenz der Folie wird nur in einem engen Arbeitspunkt erreicht.

Derartige 3 Walzen-Glättwerk gibt es auch mit einer verstellbaren 3. Walze, wobei die 2. Kühlwalze drehbar um die erste Kühlwalze angeordnet (üblicher Drehwinkel ca. 130°) ist.

Die Folie läuft wiederum aus der Schlitzdüse in den Spalt zwischen der Glättwalze und der ersten Kühlwalze und wird dort geglättet. Anschließend läuft sie weiter auf dem Umfang der zweiten Walze (erste Kühlwalze) - Kühlung der ersten Seite der Folie - einseitige Kühlung. Dabei ist die Verweilzeit und damit die Kühlzeit der Folie auf der Walze durch die Stellung der 2. Kühlwalze zur ersten Kühlwalze in gewissen Grenzen einstellbar. Danach läuft sie in den 2. Spalt zwischen der zweiten Walze und der dritten Walze - wird dort u. U. noch einmal geglättet. Anschließend läuft sie auf dem Umfang der dritten Walze (zweite Kühlwalze) - Kühlung der zweiten Seite der Folie - wieder einseitige Kühlung. Die Kontaktlänge der Folie auf der 2. Kühlwalze kann u. U. durch eine verstellbare Abnahmewalze ebenfalls beeinflußt werden. Durch die variable Anordnung der 2. Kühlwalze und ggf. einer Abnahmewalze ist der Einsatzbereich variabler als bei einer feststehenden Walzenanordnung. Die Abkühlgeschwindigkeit ist für einen größeren Dickenbereich der Folie einstellbar. Damit kann auch über einen größeren Bereich eine hohe Transparenz der Folie erreicht werden.

Es entstehen aber höhere Kosten durch die zusätzlich notwendige Mechanik. Es liegt eine "weichere" (elastischere) Konstruktion vor. Es liegt ein größerer Einsatzbereich als beim konventionellen 3-Walzen Glättwerk vor, jedoch auch bei diesem Glättwerk gibt es aufgrund der geometrischen Gegebenheiten eine Beschränkung des Einsatzbereiches.

Bekannt sind noch Bandglättwerke, bestehend aus 2 gegenüberliegenden Bändern, bei denen die Folie aus der Schlitzdüse in einen Spalt läuft, der von zwei umlaufenden gegenüberliegenden parallel laufenden Bändern gebildet wird, zwischen den beiden Bändern geglättet und beidseitig symmetrisch abgekühlt wird. Die Folie ist beidseitig geglättet und spannungsarm.

Die Problematik bei diesem System liegt darin, dass das Bandglättwerk nur für einen sehr engen Arbeitsbereich ausgelegt werden kann. Eine Änderung der Ausstoßleistung ist aufgrund der mechanischen Gegebenheiten nicht möglich. Aufgrund der technischen Möglichkeiten ist die Breite eines Bandglättwerks beschränkt und die Fertigung breiter Bänder mit hoher Oberflächenqualität hoher Planlage ist schwierig und teuer. Die abzuführende Wärmemenge steigt proportional zur Breite des Bandes. Die für die Verrohrung zur Verfügung stehenden Seitenflächen sind konstant, somit wird die Führung des Bandes und die Aufnahme der Spaltkräfte mit der Breite des Bandes überproportional schwieriger (Biegebalken). Weiterhin wird das Spannen des Bandes mit der Breite überproportional schwieriger - Durchbiegung der Umlenkwalze. Eine Reduzierung der Folienbreite (Deckling) ist nicht möglich. Das System verschleißt aufgrund der notwendigen Gleitflächen zur Bandführung und zur Aufnahme der Spaltkräfte sehr schnell.

Diese Vorrichtungen lassen sich kombinieren, so dass ein 3-Walzenglättwerk und Bandglättwerk, bestehend aus 1 Glättwalze, 2 Kühlwalzen und ein oder 2 Bändern, die an der Umfangsfläche der Kühlwalzen die Folie auf der jeweils außen liegenden Seite kühlen, entsteht.

Auch hier läuft die Folie aus der Schlitzdüse in den Spalt zwischen der Glättwalze und der ersten Kühlwalze - wird dort geglättet. Dann läuft sie weiter auf dem Umfang der zweiten Walze (erste Kühlwalze) - Kühlung der ersten Seite der Folie - gleichzeitig wird die Folie durch das an der Außenseite der Folie anliegende Band auf der anderen Folienseite weiter geglättet und gekühlt. Sie läuft in den 2. Spalt zwischen der zweiten Walze und der dritten Walze - wird dort u. U. noch einmal geglättet und läuft dann auf dem Umfang der dritten Walze (zweite Kühlwalze) - Kühlung der zweiten Seite der Folie - gleichzeitig auch hier die Kühlung und Glättung der Außenseite der Folie durch das anliegende Band.

Die Führung der Bänder parallel zum Umfang der Walzen ist schwieriger als eine gerade Führung, da zusätzlich zu den Problemen einer präzisen Fertigung der Bänder auch die Durchmesseränderungen der Walze in Abhängigkeit von der Temperatur berücksichtigt werden müssen. Bedingt durch die Probleme bei der Fertigung und dem Betrieb der Bänder ist auch hier die Bandbreite beschränkt. Die Auslegung des Glättwerks erfolgt auf einen bestimmten Durchsatz- und/oder Produktbereich und ist später nur mit hohem Aufwand zu ändern oder zu korrigieren. Eine Steigerung der Ausstoßleistung ist nur bedingt möglich. Eine hohe Abkühlgeschwindigkeit der Folie und damit eine gewünschte hohe Transparenz der Folie wird auch hier nur in einem engen Arbeitspunkt erreicht.

Aus dem Stand der Technik sind einige Vorrichtungen zum Abkühlen von Folie bekannt, so beschreibt die DE 195 22 118 C1, die den Oberbegriff des Anspruchs 1 offenbart, Külvorrichtung bei der die erzeugte Platte über mehrere Rollen zum Abkühlen gefördert wird. Die DE 26 58 680 A1 und die GB 1 579 234 A offenbaren eine Vorrichtung bei die Kühlstrecke durch verstellen der Kühlwalzen verändert werden kann. Nach der US 3 351 697 A wird eine Folie auch über nicht angetriebene Rollen geführt und dadurch fortlaufend längsgereckt. Auch die DE 35 21331 A 1 offenbart ein Verfahren zum Verstecken von extrudierter Folie. Schließlich gibt die US 4 105 386 A noch einen Hinweis, wie nachgeschaltete Walzen verstellt werden können. **Aufgabe** der Erfindung ist es daher, eine Vorrichtung und ein Verfahren anzubieten, bei dem die oben beschriebenen Nachteile vermieden werden, insbesondere eine hohe Abkühlgeschwindigkeit erreichbar ist.

Die **Lösung** der vorrichtungsgemässen Aufgabe ist durch Anspruch 1 angegeben.

Mehrere Walzenpaare sind zu Modulen zusammengefasst. Bevorzugt werden Module bestehend aus 6 oder 4 Walzenpaaren.

Da die Walzen der Walzenpaare und/oder die Walzenpaare selbst zueinander verstellbar sind wird es in dieser Ausführungsform möglich, der Folie einen individuellen Durchlauf durch die angeordneten Walzen zu verschaffen, womit beispielsweise auch eine angepasste Kühlung erreicht werden kann. Die Walzen sind einzeln oder zusammen antreibbar, womit der Durchlauf der Folie begünstigt wird.

Die Temperierung der Walzen kann durch eine innere Medienkühlung mittels Wasser, Luft, Gas oder Öl erreicht werden.

Einen weiteren Vorteil der erfindungsgemäßen Vorrichtung bietet die Möglichkeit, die einzelnen Walzen mit gleicher oder unterschiedlicher Oberflächengüte auszuführen, was beispielsweise für die ersten vier Walzenpaare genutzt werden könnte.

Die zu Modulen zusammengefassten Walzenpaare sind relativ zur Kalibrierung in Extrusionsrichtung verstellbar. Sie können aber auch relativ zu Kalibrierung senkrecht zur Extrusionsrichtung verstellt werden. Die so aneinanderreihbaren Module können beliebig fortgesetzt werden, je nach Anforderung in der Extrusionslinie.

Als Führung für die Walzen wird eine Schere oder Linearführungen vorgeschlagen. Zur Verstellung der Walzen, was bevorzugt symmetrisch sein soll, oder auch zur Verstellung der Module werden Pneumatikzylinder, Hydraulikzylinder oder Spindeln vorgeschlagen. Zum Aufbringen von Spaltkräften, beispielsweise zwischen einer Kalibrierwalze und der ersten Kühlwalze, werden die Walzen mit verstärkter Lagerung ausgeführt.

Die **Lösung** des erfindungsgemäßen Verfahrens ist durch Anspruch 7 angegeben.

Mit diesem Verfahren wird somit eine hohe Abkühlgeschwindigkeit erreicht, da die Anordnung der Walzen individuell auf die zu fertigende Folie angepasst werden kann.

In den Zeichnungen ist schematisch eine erfindungsgemäße Vorrichtung gezeigt.
- Fig. 1: zeigt die Vorrichtung für einen direkten Durchlauf,
- Fig. 2: für einen Umlauf
- Fig. 3: einen annähernden Durchlauf
- Fig. 4: als Anreihung der Walzen und
- Fig. 5: ein Beispiel der Verstellung

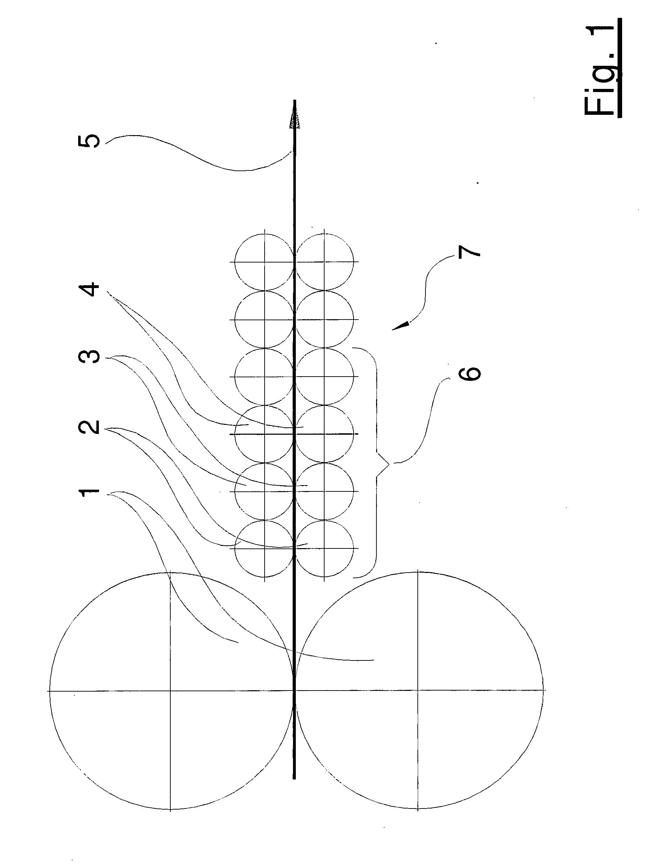

Figur 1 zeigt die beiden Kühl- oder Kalibrierwalzen 1, in dessen Spalt die Folie aus einer nicht dargestellten Schlitzdüse eingebracht wird. Die Kühlstrecke 7 besteht aus mehreren Walzenpaaren 2, 3, 4, wobei mehrere Walzenpaare zu einem Modul 6 zusammengefasst sind. Die Anordnung der Walzenpaare ist so gewählt, dass die Folie 5 einen durchlaufenden Walzenspalt bildet.

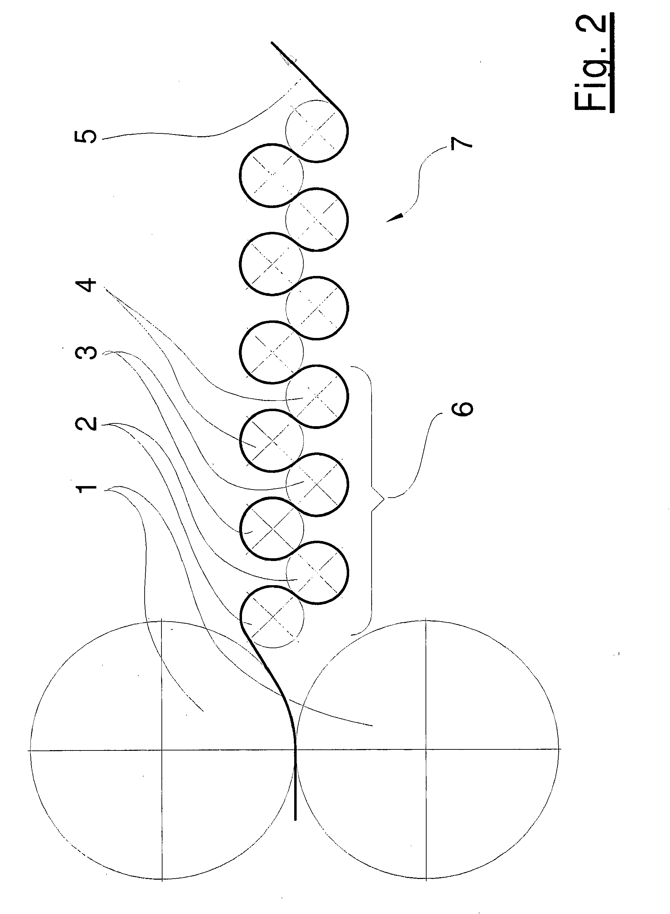

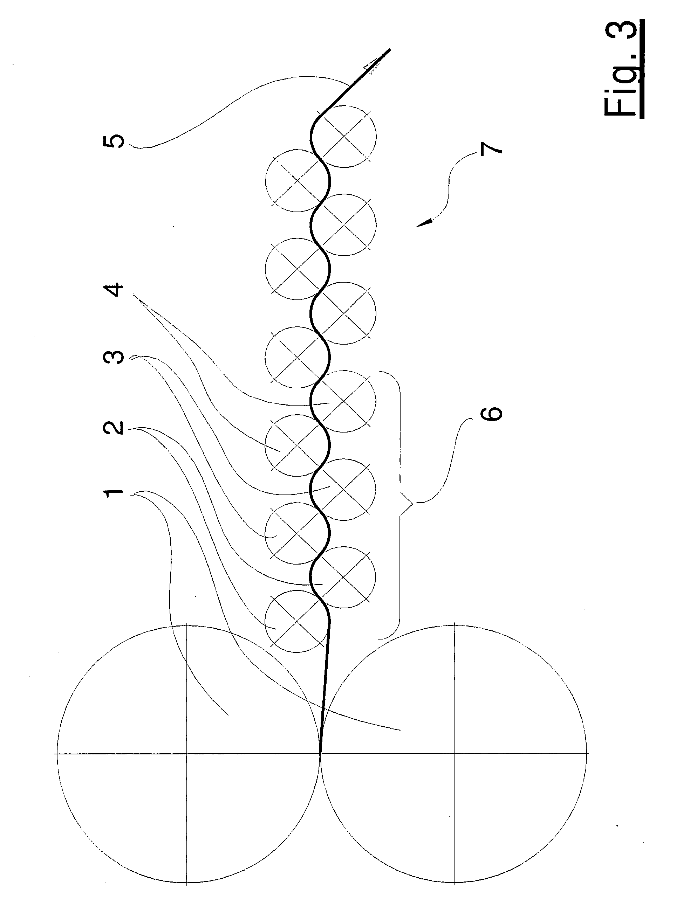

Im Gegensatz hierzu ist in Figur 2 die Anordnung der Walzenpaare versetzt gewählt. Die Kühlstrecke 7 wird somit länger. Die Folie 5 kann nun über diese Anordnung der Walzenpaare so durchgeführt werden, dass sie quasi sämtliche Walzen umläuft oder, wie in Figur 3 dargestellt, nur zwischen den Walzen durchläuft. In beiden Figuren 2 und 3 sind wieder die zwei Kühl-/Kalibrierwalzen 1 zu sehen, von wo aus die Folie 5 über die als Modul 6 zusammengefassten Walzen 2, 3, 4 durch die Kühlstrecke 7 geführt wird.

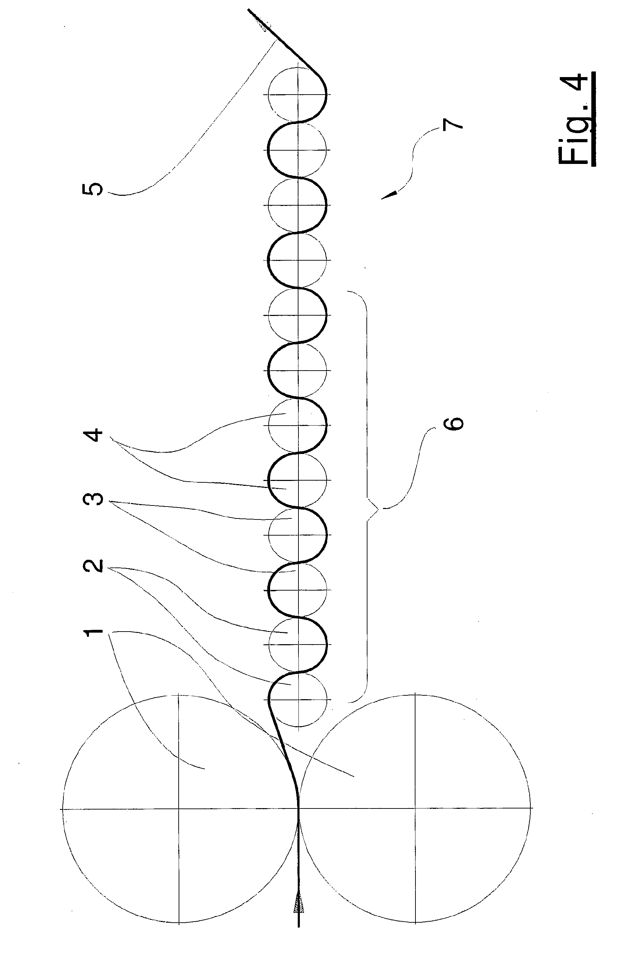

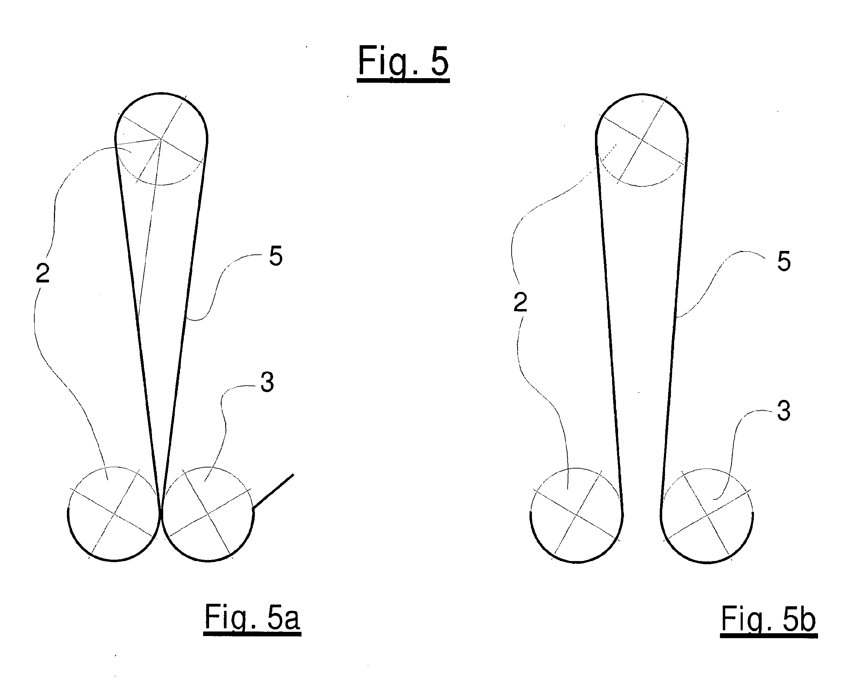

Eine andere Anordnung der Kühlstrecke ist in Figur 4 gezeigt. Den Kühl-/Kalibrierwalzen 1 ist die Kühlstrecke 7 nachgeschaltet, wobei die Walzenpaare zu einem Modul 6 zusammengefasst sind. Die Folie 5 wird vom Spalt zwischen den Kühl- und Kalibrierwalzen 1 um die Walzen 2, 3, 4 usw. durchgeführt. Die Folie umschlingt quasi die Walzen. Wird eine weitergehende Temperaturbeeinflussung der Folie benötigt, beispielsweise Zeit zum Temperaturausgleich zwischen zwei Walzen, können jeweils zwei aufeinander folgende Walzen weiter auseinander gefahren werden wie dies in Figur 5 dargestellt wird. Figur 5 a unterscheidet sich zu Figur 5b dadurch, dass die unten liegenden Walzenpaare enger aneinander liegen.

Es ist somit gezeigt, dass die Folie aus der Schlitzdüse in den Spalt zwischen zwei Glättwalzen laufen kann, wo sie geglättet wird. Die Folie läuft weiter in der Vorrichtung, in der Walzenpaare hintereinander angeordnet sind. Die Walzen sind zueinander derart verstellbar, dass alle Walzenanordnungen vom quasi Durchlaufen durch die Walzenspalte bis zum quasi Umlaufen der Walzen, wechselweise mit oder ohne Temperierstrecke, in allen Kombinationen möglich ist. Die Walzen sind optimalerweise in Modulen angeordnet, wobei vier Paare oder sechs Paare bevorzugt werden. Diese Module sind relativ zu den Glättwalzen verschiebbar, so dass die Anordnung der Walzen zueinander (obere zu untere Walzenreihe) und relativ zu den Kalibrierwalzen während des Betriebs veränderbar ist.

Dies hat den Vorteil, dass die Temperaturführung der Folie sich durch die unterschiedliche Kühlwalzenanordnung so gestalten lässt, dass die Abkühlung der Folie in fast jedem Arbeitspunkt der Extrusionsanlage der theoretischen Wärmeleitfähigkeit der Folie entspricht. Es ist somit eine schnellstmögliche Abkühlung möglich, die eine hohe Transparenz der Folie erreicht, da die Kristallisation sehr gut beeinflussbar ist. Die geringe Biegung der Folie, bedingt durch geringere innere Spannungen, legt eine bessere Planlage vor und somit eine bessere Qualität der Folie. Die Folie wird symmetrisch abgekühlt, womit u.U. der vorhandene leichte Versatz zweier Walzen eines Paares gegenüber der Anordnung mit zwei großen Kühlwalzen vernachlässigt werden kann. Ein weiterer Vorteil liegt darin, dass die Kühlstrecke aus bewährten und preiswerten Standardelementen (Kühlwalzen) zusammengesetzt werden kann. Eine Anpassung an eine höhere Ausstoßleistung der Anlage kann leicht durch Aneinanderreihen von mehreren Modulen erfolgen und muss nicht über die Verbreiterung der Anlage erreicht werden.

### Bezugszeichenliste:

- 1: Kühl-/Kalibrierwalze
- 2: erstes Walzenpaar
- 3: zweites Walzenpaar
- 4: drittes Walzenpaar
- 5: Folie
- 6: Modul aus Walzenpaaren
- 7: Kühlstrecke

## Patentansprüche

1. Vorrichtung zum Kalibrieren und Kühlen einer Kunststofffolie oder Kunststoffplatte, die aus mindestens
zwei Kühl- oder Kalibrierwalzen (1) besteht,
wobei den Walzen eine Kühlstrecke (7) nachgeschaltet ist,
wobei die nachgeschaltete Kühlstrecke (7) aus hintereinander angeordneten Walzenpaaren (2, 3, 4) besteht,
**dadurch gekennzeichnet, dass**
die Walzenpaare (2, 3, 4) zu Modulen (6) zusammen gefasst sind, wobei Module (6) die Zusammenfassung mehrerer Walzenpaare ist,
wobei die Walzen der Walzenpaare (2, 3, 4) und/oder die Walzenpaare (2, 3, 4) derart zueinander verstellbar sind, dass alle Walzenanordnungen vom quasi Durchlauf durch die Walzenspalte bis zum quasi Umlauf der Walze in allen Kombinationen möglich ist,
wobei die Walzen einzeln oder zusammen antreibbar sind,
wobei die Walzen temperiert sind.

2. Vorrichtung nach Anspruch 1, **dadurch gekennzeichnet, dass** die Walzen innen mediengekühlt sind.

3. Vorrichtung nach mindestens einem der vorigen Ansprüche,
**dadurch gekennzeichnet, dass** die Walzen mit gleicher Oberflächengüte ausgeführt sind.

4. Vorrichtung nach mindestens einem der vorigen Ansprüche,
**dadurch gekennzeichnet, dass** die Walzen mit unterschiedlicher Oberflächengüte ausgeführt sind.

5. Vorrichtung nach Anspruch 1, **dadurch gekennzeichnet, dass** die Module (6) in Extrusionsrichtung verstellbar sind.

6. Vorrichtung nach Anspruch 1, **dadurch gekennzeichnet, dass** die Module (6) senkrecht zur Extrusionsrichtung verstellbar sind.

7. Verfahren zum Kalibrieren und Kühlen von Kunststofffolie oder Kunststoffplatten, das die Schritte umfasst:
a) Einbringen einer aus einer Schlitzdüse kommenden Folie in den Spalt zwischen zwei Kühl- oder Kalibrierwalzen (1),
b) Glätten der Folie (5) zwischen den zwei Kühl- oder Kalibrierwalzen (1),
c) Kühlen der Folie (5) in einer Kühlstrecke (7),
wobei die Kühlstrecke (7) aus hintereinander angeordneten Walzenpaaren (2, 3, 4) besteht,
**dadurch gekennzeichnet, dass**
die Walzenpaare (2, 3, 4) zu Modulen (6) zusammen gefasst sind, wobei Module (6) die Zusammenfassungmehrerer Walzenpaare ist,
wobei die Walzen der Walzenpaare (2, 3, 4) und/oder die Walzenpaare (2, 3, 4) derart zueinander verstellbar sind, dass alle Walzenanordnungen vom quasi Durchlauf durch die Walzenspalte bis zum quasi Umlauf der Walze in allen Kombinationen möglich ist,
wobei die Walzen einzeln oder zusammen angetrieben werden,
wobei die Walzen temperiert sind,
wobei die Walzen derart angeordnet werden, dass die Abkühlung der Folie (5) in jedem Arbeitspunkt der Extrusionsanlage weitgehend der theoretischen Wärmeleitfähigkeit der Folie (5) entspricht.

## Claims

1. Apparatus for calibrating and cooling of a plastic film or plate, comprising at least
two cooling or calibration rollers (1),
with a cooling section (7) downstream of the rollers,
the downstream cooling section (7) consisting of successively arranged roller pairs (2, 3, 4),
**characterised in that**
the roller pairs (2, 3, 4) are combined to modules (6),
the rollers of the roller pairs (2, 3, 4) and/or the roller pairs (2, 3, 4) being adjustable relative to one another such that between the quasi-flow through the nip and the quasi-rotation around the roller, the rollers can be arranged in all possible combinations,
the rollers being driven individually or together,
the rollers being tempered.

2. Apparatus according to claim 1, **characterised in that** the rollers are internally medium-cooled.

3. Apparatus according to at least one of the preceding claims, **characterised in that** the rollers are designed with equal surface quality.

4. Apparatus according to at least one of the preceding claims, **characterised in that** the rollers are designed with different surface quality.

5. Apparatus according to claim 1, **characterised in that** the modules (6) are adjustable in the direction of extrusion.

6. Apparatus according to claim 1, **characterised in that** the modules (6) are vertically adjustable.

7. Process for the calibration and cooling of a plastic film or plate, comprising two steps:
a) insertion of a plastic film coming from a slotted nozzle into the gap between two cooling or calibration rollers (1),
b) smoothing of the film (5) between the two cooling or calibration rollers (1),
c) cooling of the film in a cooling section (7),
the cooling section consisting of successively arranged roller pairs (2, 3, 4),
**characterised in that**
the roller pairs (2, 3, 4) are combined to modules (6), modules meaning the combination of several roller pairs,
the rollers of the roller pairs (2, 3, 4) and/or the roller pairs (2, 3, 4) being adjustable such that between the quasi-flow through the nip and the quasi-rotation around the roller, the rollers can be arranged in all possible combinations,
the rollers being driven individually or together,
the rollers being tempered,
the rollers being arranged such that the cooling of the film (5) at each operating point of the extrusion apparatus closely corresponds to the theoretical thermal conductivity of the film (5).

## Revendications

1. Dispositif de calibration et de refroidissement d'un film en plastique ou d'une plaque en plastique, comprenant au moins :
deux rouleaux de refroidissement ou de calibration (1),
avec une zone de refroidissement (7) située en aval des rouleaux,
la zone de refroidissement (7) se composant de paires de rouleaux (2, 3, 4) disposées les unes à la suite des autres,
**caractérisés en ce que**
les paires de rouleaux (2, 3, 4) sont regroupées en modules,
les rouleaux des paires de rouleaux (2, 3, 4) et/ou les paires de rouleaux (2, 3, 4) étant réglables les unes par rapport aux autres de telle manière que tous les agencements des rouleaux dans toutes les combinaisons potentielles sont possibles entre le quasi-passage par la fente entre les rouleaux et la quasi-circonvolution du rouleau,
les rouleaux pouvant être entraînés individuellement ou en commun,
les rouleaux étant tempérés.

2. Dispositif selon revendication 1, **caractérisé en ce que** les rouleaux sont refroidis intérieurement par fluide.

3. Dispositif selon l'une quelconque des revendications précédentes, **caractérisé en ce que** les rouleaux sont dotés d'une qualité de surface égale.

4. Dispositif selon l'une quelconque des revendications précédentes, **caractérisé en ce que** les rouleaux sont dotés de différentes qualités de surface.

5. Dispositif selon revendication 1, **caractérisé en ce que** les modules (6) sont réglables en direction d'extrusion.

6. Dispositif selon revendication 1, **caractérisé en ce que** les modules (6) sont réglables verticalement.

7. Procédé de calibration et de refroidissement d'un film en plastique ou de plaques en plastique, comprenant les pas suivants :
a) introduction d'un film sortant d'une buse à fente dans l'interstice entre deux rouleaux de calibration ou de refroidissement (1),
b) lissage du film (5) entre les deux rouleaux de calibration ou de refroidissement (1),
c) refroidissement du film dans une zone de refroidissement (7),
la zone de refroidissement (7) se composant de paires de rouleaux (2, 3, 4) disposées les unes à la suite des autres,
**caractérisé en ce que**
les paires de rouleaux (2, 3, 4) sont regroupées en modules (6), le terme module signifiant le regroupement de plusieurs paires de rouleaux,
les rouleaux des paires de rouleaux (2, 3, 4) et/ou les paires de rouleaux pouvant être réglés les unes par rapport aux autres de telle manière que tous les agencements des rouleaux dans toutes les combinaisons potentielles sont possibles entre le quasi-passage par la fente entre les rouleaux et la quasi-circonvolution du rouleau,
les rouleaux étant entraînés individuellement ou en commun,
les rouleaux étant tempérés,
les rouleaux étant arrangées de telle manière qu'à chaque point de fonctionnement du dispositif d'extrusion, le refroidissement du film (5) correspond dans une large mesure à la conductivité thermique théorique du film (5).
